(19) Europäisches Patentamt European Patent Office Office européen des brevets

(11) **EP 2 244 400 A1**

(12) **EUROPEAN PATENT APPLICATION**

(43) Date of publication:
**27.10.2010 Bulletin 2010/43**

(51) Int Cl.:
**H04L 1/00** *(2006.01)*    **H04L 5/14** *(2006.01)*
**H04M 11/06** *(2006.01)*

(21) Application number: **09447015.0**

(22) Date of filing: **23.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Thomson Telecom Belgium**
**2650 Edegem (BE)**

(72) Inventors:
• **Cuzzola, Massimo**
  **2150 Borsbeek (BE)**
• **Willems, John**
  **2627 Schelle (BE)**

(74) Representative: **Berthier, Karine**
**THOMSON**
**European Patent Operations**
**46 Quai Alphonse Le Gallo**
**92648 Boulogne Cedex (FR)**

(54) **Device and method at the device for optimizing network parameters**

(57)    The present invention concerns a digital subscriber line modem and a method at the modem for optimizing network parameters used for data transmission between a Digital Subscriber Line modem and a Digital Subscriber Line Access Multiplexer, comprising the steps of receiving (S1) at least one first parameter from the Digital Subscriber Line Access Multiplexer, getting (S2) local parameters entered at the modem, the local parameters indicating the type of service transmitted between the Digital Subscriber Line modem and a Digital Subscriber Line Access Multiplexer, obtaining (S3) the minimum Target Service Bit Rate based on the local parameters and optimizing (S4) the Impulse Noise Protection value and the Delay value according to the minimum Target Service Bit Rate, based on the local parameters and the at least one first parameter.

| S1 receiving parameters from the central office |
| :---: |

| S2 obtaining parameters indicated locally |
| :---: |

| S3 obtaining the minimum target service bit rate |
| :---: |

| S4 optimizing the values of actual impulse noise and actual delay |
| :---: |

| S5 using the optimized values for data transmission |
| :---: |

FIG. 3

**Description**

FIELD OF THE INVENTION

The present invention relates generally to Digital Subscriber Line and in particular to a method for configuring the Digital Subscriber Line.

BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Over the last years, in order to compete with cable companies already offering triple play services such as voice, video, and data, telecommunication operators have massively started to promote the delivery of Internet Protocol Television (IPTV) over Digital Subscriber Line (DSL). IPTV is a system adapted to transmit video streams encoded as a series of Internet Protocol packets transmitted to the customer premises over a DSL connection.

Bit rates for the downstream must be high enough to support IPTV. Even using the most advanced video compression currently available, a speed of at least 4Mb/s per channel is required in the downstream direction for a standard definition channel and 9Mbps if the service includes High Definition Television. The requirements for voice are much less severe; a good voice codec needs only at most 100kb/s of bandwidth for voice applications. With the achievable bit rates provided by Asymmetric Digital Subscriber Line 2+ (ADSL2+) and Very High Bit Rate DSL2 (VDSL2), it is now possible to easily integrate voice, video and data services over a single telephone line and/or to simultaneously provide multiple standard and high-definition television channels, such as the Standard Definition Television (SDTV), and High Definition Television (HDTV), to the customer premises.

Like any DSL-based system, the quality of the consumer's video or voice services strongly depends on various environment conditions such as, among other, the bandwidth available, the quality of the channel, or the external disturbers such as crosstalk or Impulse Noise. Crosstalk is any phenomenon by which a signal transmitted on one circuit or channel of a transmission system creates an undesired effect in another circuit or channel. In particular, in telephony crosstalk is usually distinguishable as speech or signaling tones. In video, "ghost" images from one source appear in addition to the signals of interest transmitted from another. Impulse noise is noise consisting of random occurrences of energy spikes having random amplitude and spectral content. Impulse noise in a data channel can be a definitive cause of data transmission errors. Video quality degradation like pixelization or freeze of the image or in the most severe cases even the loss of the video feed are often caused by changing external line condition and degradation of the DSL link. In IPTV rollouts where DSL provides the user connectivity, it has been proven that impulse noise is the major cause stressing and in some cases overwhelming the physical layer correction capabilities, such as interleaving and Reed-Solomon coding, of the DSL modem.

The DSL modem is usually connected to a Digital Subscriber Line Access Multiplexer (DSLAM). Traditionally the DSLAM is under control of the Internet Service Provider (ISP) that provides Internet access to the DSL modem. The ISP controls the DSLAM and sets the DSL modem parameters. With the liberalization of the telecommunication market, scenarios appear more frequently where the ISP is no longer the DSLAM owner. The DSLAM owner is an Access Network Provider (ANP). Consequently, when the ISP has no direct access to the modem, it sets a general line profile between the DSLAM and the DSL modem that is not necessarily the best suitable one for the actual service instances supported at a particular time.

SUMMARY OF THE INVENTION

The present invention attempts to remedy at least some of the concerns connected with line profile settings in the prior art, by providing an optimization of the parameter values used for communication between the DSL modem and the DSLAM.

The present invention concerns a method for optimizing network parameters used for data transmission between a Digital Subscriber Line modem and a Digital Subscriber Line Access Multiplexer, comprising the steps of receiving at least one first parameter from the Digital Subscriber Line Access Multiplexer, getting local parameters entered at the modem, the local parameters indicating the type of service transmitted between the Digital Subscriber Line modem and a Digital Subscriber Line Access Multiplexer, obtaining the minimum Target Service Bit Rate based on the local parameters and optimizing the Impulse Noise Protection value and the Delay value according to the minimum Target Service Bit Rate, based on the local parameters and the at least one first parameter.

According to an embodiment, the step of optimizing comprises the step of maximizing the value of the Actual Impulse Noise Protection and minimizing the value of the Actual Delay.

According to an embodiment, the step of optimizing comprises the step of minimizing the value of the Actual Impulse Noise Protection and maximizing the value of the Actual Delay.

According to an embodiment, it comprises the step of using the optimized values to communicate with the DSLAM.

According to an embodiment, the at least one first parameter is among the minimum Impulse Noise Protection, the maximum delay, the minimum bit rate and the maximum bit rate.

According to an embodiment, the local parameters comprise the number of video and audio channels, and the optimization type.

The invention also relates to a Digital Subscriber Line modem comprising a DSL configuration module for getting local parameters entered at the modem, the local parameters indicating the type of service transmitted between the Digital Subscriber Line modem and a Digital Subscriber Line Access Multiplexer, and for getting at least one first parameter obtained from the Digital Subscriber Line Access Multiplexer, computing the minimum Target Service Bit Rate based on the local parameters, and optimizing the Impulse Noise Protection value and the Delay value according to the minimum Target Service Bit Rate, based on the local parameters and the at least one first parameter.

Another object of the invention is a computer program product comprising program code instructions for executing the steps of the method according to the invention, when that program is executed on a computer. By "computer program product", it is meant a computer program support, which may consist not only in a storing space containing the program, such as a computer memory, but also in a signal, such as an electrical or optical signal.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

BRIEF DESCRIPTION OF THE DRAWINGS

The invention will be better understood and illustrated by means of the following embodiment and execution examples, in no way limitative, with reference to the appended figures on which:

- Figure 1 is a block diagram of a system compliant with the embodiment;
- Figure 2 is a block diagram of a modem compliant with the embodiment; and
- Figure 3 is a flow chart a method compliant with the embodiment.

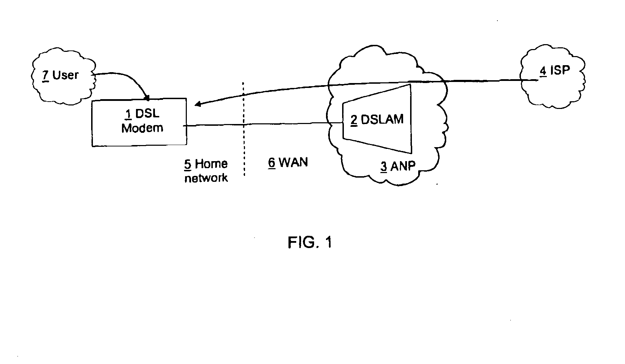

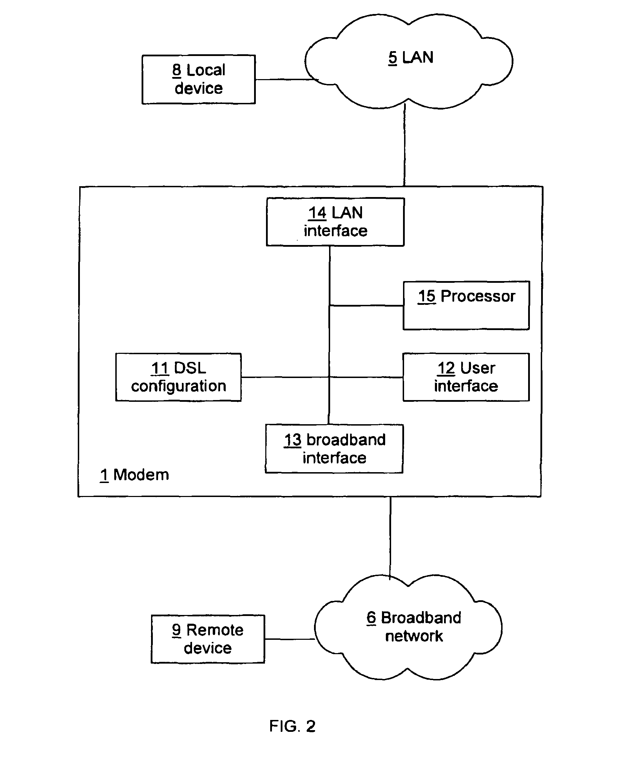

In Figures 1 and 2, the represented blocks are purely functional entities, which do not necessarily correspond to physically separate entities. Namely, they could be developed in the form of hardware or software, or be implemented in one or several integrated circuits.

DETAILED DESCRIPTION OF PREFERRED EMBODIMENTS

The exemplary embodiment comes within the framework of ADSL2 as specified in the G.992.3 draft standard version (amendment 6) of December 2008, but the invention is not limited to this particular environment and may be applied within other frameworks where network parameters are tunable between a network termination and a network device. Of course, the embodiment also applies to other types of DSL specifications such as ADSL2+ as specified in G.992.5 and VDSL in G.993.2.

The system according to the embodiment is represented in figure 1. The DSL modem 1 is located in the residential network 5, also called the home network. The DSL modem may be a standalone device or integrated in a DSL gateway or customer premise equipment (CPE). The DSL modem is connected to the Wide Area Network (WAN). In particular the WAN is the Internet. In order to access the Internet, the modem 1 is connected to a Digital Subscriber Line Access Multiplexer 2 (DSLAM). The DSLAM sets the DSL parameters in the modem. The DSLAM is also called the central office (CO) hereinafter. The DSLAM owner is the Access Network Provider 3 (ANP), which provides network access to the DSL modem. The Internet service provider 4 (ISP) provides Internet access to the DSL modem.

The DSL modem according to the embodiment is further represented in figure 2. The whole modules of a DSL modem well known per se are not represented. Figure 2 represents the modules of the modem that are most relevant to the embodiment. In particular the modem comprises a DSL configuration module 11 that is adapted to configure the modem as further described hereinafter. The modem also comprises a user interface 12 so that an end user can select and specifies the parameters according to the embodiment. The modem also comprises a processor 15 that is adapted to execute the algorithm of the embodiment. The modem also comprises an interface 14 to a local network and an interface 13 to the WAN.

In order to configure the parameters, the DSL configuration module 11 obtains parameters locally entered by an end user. It also gets parameters indicated by the CO. Then, it computes the parameters as indicated hereinafter. The modem uses the updated parameters to communicate with the DSLAM.

The method according to the embodiment for configuring the modem is now described. The method allows the modem to dynamically optimize some key parameters according to the user preference. It also tunes the modem capabilities according to the desired application or services offered from the operator.

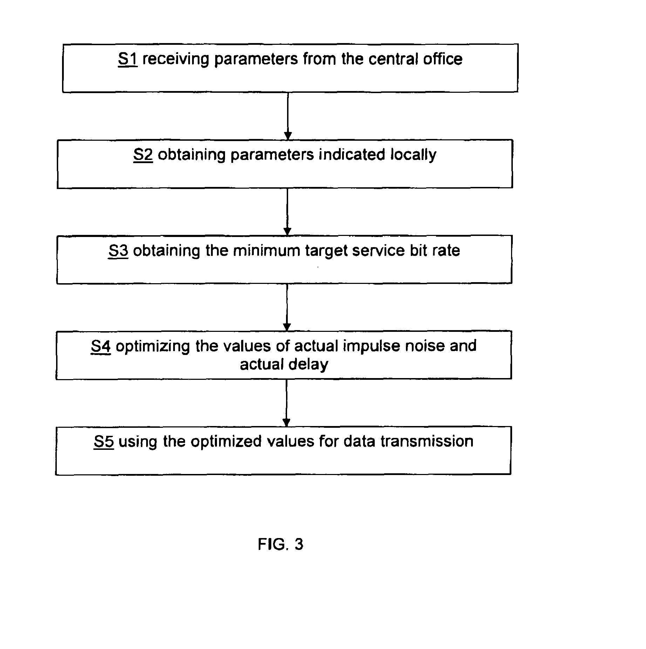

As illustrated in figure 3, the modem first receives parameters, as indicated hereinafter, from the CO, step S1. During modem configuration the user is prompted to indicate the following parameters for using the broadband connection, step S2:

- the number of digital telephone numbers that are associated to the voice service,
- the number of video channels that are simultaneously carried over the video stream,
- the type of video channel that are delivered (SDTV or HDTV), and
- the minimum target Service BitRate, if available.

If the minimum Target Service Bit Rate is not known by the end user, it is calculated at the DSL configuration module according to the following rule, step S3:

- Minimum Target Service Bit Rate (voice) = The number of digital telephone number that are associated to the voice service * 100 kbps

- Minimum Target Service Bit Rate (video) = The number of video channels that are simultaneously carried over the video stream * 4000 kbps for SDTV or

- Minimum Target Service Bit Rate (video) = The number of video channels that are simultaneously carried over the video stream * 9000 kbps for HDTV

- Minimum Target Service Bit Rate (total) = Minimum Target Service Bit Rate (voice) + Minimum Target Service Bit Rate (video) + OAM Connection Bitrate (4 kbps); where the OAM stands for Operations, Administration and Maintenance. The OAM connection Bitrate is generally the minimum Bitrate needed to keep the Internet connection up.

The end user is also given the choice to indicate the optimization type, in order to optimize the framing parameters. In particular, it is given the choice to maximize Stability or Performance. Stability means optimizing the framing parameters to get the maximum protection possible against non stationary noise at the expenses of the achievable Bitrate. Performance means trying to achieve the highest Bitrate possible at the expense of noise protection. Of course the end user can choose at any time to reconfigure the optimization type. When the optimization type is modified, the optimization algorithm is performed again.

According to the embodiment, some parameters are indicated by the end user. Of course, these parameters could alternatively be indicated by the ISP to the modem with any well known remote configuration protocol. This would permit a modem configuration without the participation of the end user.

The algorithm is based on some input received from the CO, derived from user inputs, or measured at the modem. The input parameters for the optimization algorithms are the following:

- Min_INP is the minimum Impulse Noise Protection. It is intended to reduce the effects of Impulse Noise on data. It uses a Reed Solomon Coding method to apply Forward Error Correction (FEC). Min_INP is an input from the CO. The minimal INP is used to guarantee protection against non-stationary noise. A high value of this parameter reflects in a decrease of the max achievable bit rate. The actual_INP is the INP chosen by the CPE for the downstream direction and by the DSLAM for the upstream direction. Since min_INP ≤ actual_INP, the CPE for the downstream and the CO for the upstream is usually free to choose a value for the INP as long as this constraint holds. A too conservative selection of this parameter leads to a bit rate selection lower than the minimal bit rate that is required for the service that the user or the provider wants to deploy.
- Max_Delay is the maximum delay. Max_Delay is an input from the CO. This parameter sets the depth of the interleaver function. The CPE for the downstream direction and the DSLAM for the upstream direction generally try to set the Delay as close as possible to the Max_Delay parameter. Some applications such as VoIP usually require a low delay.
- Minimum_BitRate and Maximum_BitRate are inputs from the CO. They are used to calculate the Actual BitRate. They are also used to check that when a new INP and delay combination is found the resulting new bitrate doesn't violate the initial constraints: Minimum BitRate <= Recomputed BitRate <= Maximum BitRate.

- Minimum Target Service Bit Rate may be an input communicated from the service providers and read from the CPE configuration or derived from the input provided by the end user, as indicated hereinabove.

The Min_INP, Max_Delay, Minimum_BitRate, Maximum_BitRate are parameters set on the CO profile in the provisioning phase. They are communicated to the modem during the handshake protocol according to ITU-T G.994.1 standard on Handshake procedures for digital subscriber line (DSL) transceivers. The Actual Bit Rate is the Data transfer Rate achieved after handshake negotiation and calculated according to the ADSL2 standard. The Video / Voice usage is prompted by the user as described hereinabove.

The Actual_INP and the Actual_Delay are then computed, step S4. If the user decides to optimize Stability, the algorithm tries to maximize the Actual_INP in order to better protect the video stream from impulse noise. It also tries to minimize the Actual_Delay to reduce the service delay for real time application such as Voice. If the user decides to optimize Performance, the algorithm tries to minimize the Actual_INP in order to limit the error correction overhead. It also tries to maximize the Actual_Delay to guarantee a better usage of the Interleaver memory which could reflect on higher max Achievable Bit Rate. These updated values are used by the gateway for data transmission with the DSLAM, step S5.

The algorithm for optimizing Stability is now described.

1 st step: the modem computes the bit rate according to the CO profile and to the ITU-T standard G.992.3, as specified the in chapter 7.6 on Frame Structure and in particular in chapters 7.6.1 on Derived Definitions and 7.6.2 on Valid Framing Configurations. The bit rate is the $NET_{p.act}$ of table 7.7 in chapter 7.6.1. The delay is the $delay_p$ of that table 7.7.

2nd step: target_min_INP = min_INP +1

The modem recomputes the bit rate (Recomputed_BitRates), overruling the min_INP that was communicated by the CO, with the target_min_INP value. This also results in a new interleaving delay (new_Delay) that fits with the constraint from the profile.

From the value of $INP_p$ indicated in table 7.7 in chapter 7.6.1, $S_p$ is calculated as follows:

$$Sp = 2 \times (INP \times S_p \times N\_FEC_p) / (D_p \times R_p \times DMTsymbols)$$

And the new value of $NET_{p.act}$ and $delay_p$ is calculated with that value of Sp, using the formula indicated in table 7.7 in chapter 7.6.1.

3rd step: (iterative loop to maximize the INP):

$$New\_Target\_min\_INP = target\_min\_INP$$

While (Minimum_target_Service_Bitrate <= Recomputed_BitRates <= Actual BitRate) and (new_Delay <= Max_Delay),

$$New\_target\_min\_INP = New\_target\_min\_INP+1,$$

and the modem computes the bit rate according to the New_target_min_INP value. This also results on a new Delay, calculated as indicated hereinabove.

After the while loop, a list of Actual_INP values is identified. Each Actual_INP value is superior to the min_INP requested by the CO. Each Actual_INP value is associated to an expected Actual_Delay and a new Recomputed BitRates that still fulfill the constraint that Minimum_target_Service_Bitrate <= Recomputed_BitRates <= Actual BitRate. If at least one of the Actual_INP of the calculated list >= target_Min_INP, then that value becomes the new_Target_min_INP. If there is more than one, the Actual_INP that leads to the highest Actual_Delay is chosen.

4th step: (iterative loop to minimize Delay):

$$Max\_INP = new\_target\_Min\_INP$$

While (Minimum_target_Service_Bitrate <= Recomputed_BitRate <= Actual BitRate) (keeping constant max_INP)

$$\mathsf{min\_delay= new\_Delay\ \text{-}1}$$

In that step, the delay is optimized. For each new delay value, a new_target_min_INP value is obtained. And that new_target_min_INP value is not the same as the target_min_INP value. It is then necessary to check that the initial constrains still holds: If (new_target_min_INP >= target_Min_INP) then go to next step.

5th step: a new set of framing parameter Max_INP, min_Delay is output. It results in a new possible Actual Bit Rate that still fulfills the constraint given by the CO settings, and optimizes the protection against Impulse noise.

The algorithm for optimizing Performance is now described. It is basically the same algorithm as the one for optimizing Stability, with the differences indicated herein below.

1 st Step: the modem computes the Bit Rate as indicated hereinabove.

2nd step: If Actual_INP > Min_INP

$$\mathsf{target\_min\_INP = ceil\ (Actual\_INP\ \text{-}1)}$$

if Actual_INP=min_INP, then go to step 4, else

The modem recomputes the bit rate (Recomputed_BitRates) overruling the Actual_INP (as long as it is still higher than Min_INP) that was negotiated with the CO with the new_target_INT. This also results on a list of possible new interleaving delays (new_Delay). Theses values are obtained as indicated in the algorithm herein above.

3rd step: (iterative loop to minimize INP):

$$\mathsf{new\_target\_min\_INP = target\_min\_INP}$$

While (Minimum_target_Service_Bitrate <= Recomputed_BitRates <= Actual BitRate) and (new_Delay <= Max_Delay) and (new_Target_min_INP >= min INP)

$$\mathsf{new\_target\_min\_INP = new\_target\_min\_INP\text{-}1,}$$

and the modem recomputes the bit rate according to the new_target_min_INP value. This results in a new Delay. After the while loop the modem identifies a list of expected Actual_INP values (target_min_INP) each with an expected new_Delay and a new Recomputed BitRates that still fulfill the constraint that Minimum_target_Service_Bitrate <= Recomputed_BitRates <= Actual BitRate.

4th step: (iterative loop to minimize Delay):

$$\mathsf{Min\_INP = new\_target\_Min\_INP}$$

While (Minimum_target_Service_Bitrate <= Recomputed_BitRate <= Actual BitRate) (keeping constant Min_INP)

$$\mathsf{Max\_delay = new\_Delay+1}$$

5th step: a new set of framing parameter Min_INP, max_Delay is output. It results in a new possible Actual Bit Rate that still fulfills the constrain given by the CO settings, and offers an highest Actual BitRate.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

## Claims

1. Method for optimizing network parameters used for data transmission between a Digital Subscriber Line modem and a Digital Subscriber Line Access Multiplexer, comprising the steps of:

   - receiving (S1) at least one first parameter from said Digital Subscriber Line Access Multiplexer;
   - getting (S2) local parameters entered at the modem, said local parameters indicating the type of service transmitted between said Digital Subscriber Line modem and a Digital Subscriber Line Access Multiplexer;
   - obtaining (S3) the minimum Target Service Bit Rate based on said local parameters; and
   - optimizing (S4) the Impulse Noise Protection value and the Delay value according to said minimum Target Service Bit Rate, based on said local parameters and said at least one first parameter.

2. Method according to claim 1, **characterized in that** the step of optimizing comprises the step of maximizing the value of the Actual Impulse Noise Protection and minimizing the value of the Actual Delay.

3. Method according to claim 1, **characterized in that** the step of optimizing comprises the step of minimizing the value of the Actual Impulse Noise Protection and maximizing the value of the Actual Delay.

4. Method according to any one of the preceding claims, comprising the step of using the optimized values to communicate with the DSLAM.

5. Method according to any one of the preceding claims, said at least one first parameter being among the minimum Impulse Noise Protection, the maximum delay, the minimum bit rate and the maximum bit rate.

6. Method according to any one of the preceding claims, said local parameters comprising the number of video and audio channels, and the optimization type.

7. Digital Subscriber Line modem (1) comprising a DSL configuration module (11) for getting local parameters entered at said modem, said local parameters indicating the type of service transmitted between said Digital Subscriber Line modem and a Digital Subscriber Line Access Multiplexer (2), and for getting at least one first parameter obtained from said Digital Subscriber Line Access Multiplexer (2), computing the minimum Target Service Bit Rate based on said local parameters, and optimizing the Impulse Noise Protection value and the Delay value according to said minimum Target Service Bit Rate, based on said local parameters and said at least one first parameter.

8. Computer program product, **characterized in that** it comprises program code instructions for executing the steps of the method according to claim 1 to 6 when said program is executed on a computer.

**7** User

**1** DSL
Modem

**2** DSLAM

**4** ISP

**5** Home
network

**6** WAN

**3** ANP

FIG. 1

FIG. 2

S1 receiving parameters from the central office

S2 obtaining parameters indicated locally

S3 obtaining the minimum target service bit rate

S4 optimizing the values of actual impulse noise and actual delay

S5 using the optimized values for data transmission

FIG. 3

Europäisches
Patentamt
European
Patent Office
Office européen
des brevets

# EUROPEAN SEARCH REPORT

Application Number

EP 09 44 7015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/195871 A1 (GULATI KAPIL [US] ET AL) 23 August 2007 (2007-08-23)<br>* abstract *<br>* paragraph [0004] *<br>* paragraph [0005] *<br>* paragraph [0008] *<br>* paragraph [0009] - paragraph [0013] *<br>* paragraph [0026] *<br>* paragraph [0064] *<br>* paragraph [0066] - paragraph [0074] *<br>* paragraph [0081] *<br>* figure 2 *<br>* figure 3 *<br><br>----- | 1-8 | INV.<br>H04L1/00<br>H04L5/14<br>H04M11/06 |
| X | US 2006/215742 A1 (MODLIN CORY S [US]) 28 September 2006 (2006-09-28)<br>* abstract *<br>* paragraph [0015] *<br>* paragraph [0017] - paragraph [0020] *<br>* paragraph [0038] - paragraph [0042] *<br>* figure 3 * | 1,2,4-8 | |
| Y | <br>----- | 3 | TECHNICAL FIELDS SEARCHED (IPC)<br><br>H04L<br>H04M |
| Y | "Asymmetric digital subscriber line transceivers 2 (ADSL2); G.992.3 (2002) Amendment 4 (06/04)"<br>ITU-T STANDARD SUPERSEDED (S),<br>INTERNATIONAL TELECOMMUNICATION UNION,<br>GENEVA, CH, no. G.992.3 (2002) Amend,<br>13 June 2004 (2004-06-13), XP017401225<br>* table K.3a/G.992.3 *<br>* table K.3b/G.992.3 *<br><br>-----<br><br>                              -/-- | 3 | |

The present search report has been drawn up for all claims

| Place of search | Date of completion of the search | Examiner |
|---|---|---|
| Munich | 22 September 2009 | Murcia Martinez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 09 44 7015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PETER ADAMS BT UK: "Impulse Noise Protection Optimisation; D 452" ITU-T DRAFT STUDY PERIOD 2005-2008, INTERNATIONAL TELECOMMUNICATION UNION, GENEVA ; CH, vol. STUDY GROUP 15, 16 May 2005 (2005-05-16), pages 1-3, XP017407566 * the whole document * | 3 | |
| Y | PETER ADAMS BT UK: "Delay Minimisation; D 451" ITU-T DRAFT STUDY PERIOD 2005-2008, INTERNATIONAL TELECOMMUNICATION UNION, GENEVA ; CH, vol. STUDY GROUP 15, 16 May 2005 (2005-05-16), pages 1-3, XP017407565 * the whole document * | 3 | |
| A | US 2008/112472 A1 (OKSMAN VLADIMIR [US] ET AL) 15 May 2008 (2008-05-15) * the whole document * | 1-8 | TECHNICAL FIELDS SEARCHED (IPC) |
| A | WO 2005/057837 A (ADAPTIVE SPECTRUM & SIGNAL [US]; CIOFFI JOHN M [US]) 23 June 2005 (2005-06-23) * page 1 - page 5 * * page 8, line 11 - line 13 * * page 12, line 23 - line 28 * * page 13, line 1 - line 8 * * page 16, line 4 - line 14 * * page 20, line 1 - line 22 * * page 25, lines 12-23 * | 1-8 | |

The present search report has been drawn up for all claims

| Place of search | Date of completion of the search | Examiner |
|---|---|---|
| Munich | 22 September 2009 | Murcia Martinez, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 09 44 7015

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2009

| Patent document cited in search report | | Publication date | Patent family member(s) | | Publication date |
|---|---|---|---|---|---|
| US 2007195871 | A1 | 23-08-2007 | EP 1989783 A2<br>WO 2007098491 A2 | | 12-11-2008<br>30-08-2007 |
| US 2006215742 | A1 | 28-09-2006 | NONE | | |
| US 2008112472 | A1 | 15-05-2008 | NONE | | |
| WO 2005057837 | A | 23-06-2005 | AU 2004298118 A1<br>CA 2548743 A1<br>EP 1700410 A1<br>JP 2007513557 T<br>US 2009086800 A1<br>US 2005138524 A1 | | 23-06-2005<br>23-06-2005<br>13-09-2006<br>24-05-2007<br>02-04-2009<br>23-06-2005 |

EPO FORM P0459

For more details about this annex : see Official Journal of the European Patent Office, No. 12/82